Europäisches Patentamt

**European Patent Office**

**Office européen des brevets**

(19)

(11) Publication number: **0 107 384**
A1

(12)

# EUROPEAN PATENT APPLICATION

(21) Application number: **83305823.3**

(22) Date of filing: **28.09.83**

(51) Int. Cl.³: **C 01 B 33/28**, B 01 J 37/30, B 01 J 37/02

(30) Priority: **28.09.82 US 425362**

(43) Date of publication of application: **02.05.84**
Bulletin **84/18**

(84) Designated Contracting States: **BE DE FR GB IT NL**

(71) Applicant: **MOBIL OIL CORPORATION, 150 East 42nd Street, New York New York 10017 (US)**

(72) Inventor: **Miale, Joseph Nicolas, 25 Merritt Drive, Lawrenceville New Jersey 08648 (US)**
Inventor: **Chang, Clarence Dayton, 11 Murray Place, Princeton New Jersey 08540 (US)**

(74) Representative: **West, Alan Harry, Mobil Court 3 Clements Inn, London WC2A 2EB (GB)**

(54) A method for preparing metal-impregnated crystalline aluminosilicates.

(57) A method for preparing a cation-exchanged or metal-loaded crystalline aluminosilicate zeolite utilizes liquid ammonia as the solvent for the metal to be impregnated into the zeolite.

EP 0 107 384 A1

F-1866                           -1-


## A METHOD FOR PREPARING METAL-IMPREGNATED
## CRYSTALLINE ALUMINOSILICATES

This invention relates to a method for preparing metal-impregnated crystalline aluminosilicate zeolites, particuarly high silica zeolites.

Zeolitic materials, both natural and synthetic, have been demonstrated in the past to have catalytic capabilities for various types of hydrocarbon conversion. Certain zeolitic materials are ordered, porous crystalline aluminosilicates having a definite crystalline structure within which there are a large number of small cavities which are interconnected by a number of still smaller channels. These cavities and channels are precisely uniform in size. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves include a wide variety of positive ion-containing crystalline aluminosilicates, both natural and synthetic. These aluminosilicates can be described as a rigid three-dimensional network of $SiO_4$ and $AlO_4$ in which the tetrahedra are cross-linked by the sharing of oxygen atoms whereby the ratio of the total aluminum and silicon atoms to oxygen is 1:2. The spaces between the tetrahedra are occupied by molecules of water prior to dehydration. The electrovalence of the tetrahedra containing aluminum is balanced by the inclusion in the crystal of a cation, for example, an alkali metal or an alkali earth metal cation. This can be expressed wherein the ratio of aluminum to the number of various cations, such as Ca/2, Sr/2, Na, K or Li is equal to unity. One type of cation can be exchanged either entirely or partially by another type of cation utilizing ion exchange techniques in a conventional manner. By means of such cation exchange, it has been possible to vary the size of the pores in the given aluminosilicate by suitable selection of the particular cation.

F-1866                                              -2-

The catalytic properties of metal-impregnated aluminosilicates have been demonstrated to be extremely important to petroleum, chemical and enzymatic reactions. The aluminosilicates have been activated, i.e., metal-impregnated, for these reactions by methods employing loading vapor deposition and base-exchange of the desired metal to be impregnated. The use of aqueous solutions, especially those of polyvalent metal salts, is the standard method employed to exchange the metals into the crystalline aluminosilicate structure. However, the use of aqueous solutions severely limits the availability by those skilled in the art to exchange into the crystalline aluminosilicate structure catalytically important metals and other cations; notably, most of the transition metals, the noble metals, other cations such as tellurium, selenium, zirconium, vanadium, hydrogen, alkaline earth and rare earth, metals.

Cation exchange may be thwarted or prevented, since, in the aqueous media conventionally employed, one or more of the following phenomena occur:

(1) The cation is converted to an anion in aqueous solution.

(2) Compounds containing the cation are insoluble in aqueous solutions, thus no cations are formed in solution.

(3) Compounds containing the cation in solution of aqueous media result in low pH conditions that destroy some aluminosilicates entirely, and other aluminosilicates partially.

(4) Compounds containing the cation in a complex form which are soluble in aqueous media and able to penetrate large pore zeolites, are too large to penetrate the pores of many of the other zeolites so that production of shape-selective catalysts with these cations is impossible or the impregnation of such metals is insufficient such that the metal is deposited on the external surface of the zeolite or in the matrix. Often in metal-containing zeolites the metals are not adequately anchored within the zeolite channels. Under the severe conditions of temperature and pressure encountered in catalysis, the occluded metals migrate from the zeolite channels to the zeolite surface.

(5) Hydrophobicity is also a limiting factor in most metal impregnation using aqueous solutions, especially in hydrophobic

aluminosilicates having high $SiO_2/Al_2O_3$ mole ratios, e.g., $SiO_2/Al_2O_3$ greater than about 20, including aluminum-free porotectosilicates.

U.S. Patent No. 3,528,768 discloses a method of preparing cation-exchanged crystalline aluminosilicates which comprises contacting a crystalline aluminosilicate with an anhydrous organic solvent solution of each of the metals to be loaded into the aluminosilicate. The anhydrous organic solvent can be selected from dimethyl sulfoxide, sulfolane, methylsulfolane, dimethylsulfolane, acetonitrile, acrylonitrile, and propionitrile.

U.S. Patent No. 3,959,179 discloses a process for preparing novel desulfurization catalysts containing at least one oxide of a Group VIB or Group VIII metal incorporated within a refractory base by impregnating the base with a solution of a soluble compound of each metal in a non-aqueous polar solvent, drying the impregnated base and calcining the dried impregnated base. Dimethyl sulfoxide is the most preferred solvent. Other solvents include tetrahydrofuran, sulfolanes, cyanides and nitriles, such as alkyl cyanides and acrylonitrile and lower alkyl amides, such as dimethyl formamide.

In Zeolite Molecular Sieves - Structure, Chemistry and Use, Donald W. Breck, John Wiley & Sons, 1974, cation exchange in other non-aqueous solvents is disclosed. Lower alcohols ($C_1-C_4$) and inorganic fused salts are mentioned. While the lower molecular weight organic fused salt solvents disclosed in the above publications will be able to effectively penetrate the pores of the larger pore zeolites, many of the solvents disclosed will not provide effective cationic exchange, since like the aqueous systems, the fused salts and cation complexes in organic solution will generally be too large to enter the pores of many aluminosilicate zeolite catalysts.

In accordance with the present invention, there is provided a method for preparing a metal impregnated crystalline aluminosilicate which comprises contacting the crystalline aluminosilicate with a solution of a metal compound in a liquid, predominantly non-aqueous inorganic solvent and recovering the resultant cation-exchanged or metal-loaded crystalline aluminosilicate.

F-1866                                    -4-

  The resultant cation-exchanged or loaded crystalline aluminosilicate or aluminum-free porotectosilicate is suitable for use as a catalyst in hydrocarbon conversion processes generally, and processes including hydrogenation, dehydrogenation, reforming, cracking, including hydrocracking, alkylation, isomerization, polymerization, dealkylation, dewaxing and olefin production, specifically.

  The crystalline aluminosilicates employed herein have an ordered internal structure and a pore size ranging between 4 and 15 Angstrom units. They may be either natural or synthetic. Illustrative of preferred zeolites are faujasite, erionite, mordenite, chaoazite, philipsite, gmelinite, zeolite X, zeolite Y, zeolite T, zeolite ZK-5, ZSM-5 type catalyst including ZSM-5, ZSM-11, ZSM-12, ZSM-23, ZSM-35 and ZSM-38.

  Particularly preferred zeolites are those which have high silica-to-alumina mole ratios, e.g., $SiO_2/Al_2O_3$ greater than 20 including those having $SiO_2/Al_2O_3$ ratios greater than 70 and even aluminum-free porotectosilicates. Aluminosilicates having high silica-to-alumina ratios have hydrophobic properties and are difficult to load with metals using the known aqueous medium exchange means.

  The inorganic solvent solution is preferably anhydrous, although minimal water may be present with the non-aqueous solvent without adverse effect on cation-exchange. Those cations which are particularly preferred include alkaline earth, rare earth and various other transition metals. Additionally, it is possible to employ the noble metals and other metals, such as tellurium, selenium, zirconium, and vanadium which have a common property in that they are difficult to exchange into the crystalline aluminosilicate structure by known aqueous medium exchange means.

  The preferred inorganic solvent employed is liquid ammonia with anhydrous liquid ammonia being particularly preferred. Useful salts of the metallic elements being exchanged or loaded into the crystalline aluminosilicate are those salts of the elements having some degree of solubility in the liquid ammonia, especially nitrates, as well as metal/$NH_3$ solutions, e.g. Na and $NaNH_2$. The range of concentration of cation to solvent is not particularly critical, since the lower the concentration of cation, the more contacts are required, and conversely the higher the concentration is from 0.1 weight percent to saturation, less contact time is required.  The amount of catalytically active metal component incorporated within the crystalline structure of the aluminosilicate may vary widely and will depend upon the chargestock undergoing conversion as well as on the particular nature of the metal component.  Generally, the amount of each metal component will be within the range of 0.05 to 20 percent by weight.  It will be understood that the amount of metal component will be such as to afford selective conversion of the portion of the charge mixture making contact with the active catalytic surfaces and undergoing conversion.

Reaction temperature is not particularly critical, although the temperature of the solution should be such that the solvent is provided in the liquid state.  A dry ice/alcohol coolant can be used for this purpose.  A nitrogen or inert atmosphere may be desirably maintained during the aforesaid base-exchange procedures.

The metal salts, such as metal nitrate, are introduced within the zeolite by dissolving the metal salt in a non-aqueous inorganic solvent and contacting the zeolite with the formed solution.  The solvent can be liquid ammonia or ammonia mixed eith less than 50 weight percent water.  In addition, other inorganic solvents such as liquid $SO_2$ can be used.  The solution permeates the zeolite structure resulting in intrazeolite occlusion of the metal salts.  The zeolite is then heated under generally mild temperatures ranging from room temperature to 400°F (204°C), preferably 230 to 300°F (110 to 149°C), in order to drive off the ammonia solvent.  The resulting dried composition is then calcined at temperatures ranging from 475 to 1200°F (246 to 649°C), for periods ranging from 0.5 to 24 hours, preferably 1 to 4 hours.  Such calcining produces zeolite compositions containing virtually immobilized occluded metals.

Partially metal-loaded zeolites are simply dried and calcined as disclosed above.  To yield fully cation-exchanged zeolites, partially loaded zeolites may be hydrated and washed with dilute solutions of the salt or with the base of the metallic element being loaded into the aluminosilicate. The fully exchanged or loaded zeolite is then calcined as described above.

The invention will now be further described with reference to the following examples in which ZSM-5 is loaded with calcium using liquid ammonia as a carrier and by way of comparison, the commonly used aqueous solutions. The alpha activity of the catalysts is then measured. In this respect, it is to be appreciated that the degree of zeolite acid activity of zeolite catalysts can be measured and compared by means of "alpha value" ($\alpha$). The alpha value reflects the relative activity of the catalyst with respect to a high activity silica-alumina cracking catalyst. To determine the alpha value as such term is used herein, n-hexane conversion is determined at a suitable temperature between 290 to 540°C (550 to 1000°F), preferably at 540°C (1000°F). Conversion is varied by variation in space velocity such that a conversion level of up to 60 percent of n-hexane is obtained and converted to a rate constant per unit volume of zeolite and compared with that of silica-alumina catalyst which is normalized to a reference activity of 540°C (1000°F). Catalytic activity of the catalysts is expressed as a multiple of this standard, i.e., the silica-alumina standard which has a rate constant of 0.016 sec$^{-1}$ in conversion of n-hexane at 540°C. The silica-alumina reference catalyst contains 10 weight percent $Al_2O_3$ and the remainder $SiO_2$. This method of determining alpha, modified as described above, is more fully described in the Journal of Catalysis, Vol. VI, pages 278-287, 1966.

## Example 1

A sample of HZSM-5 ($SiO_2/Al_2O_3$=70, $\alpha$=200) was base-exchanged with aqueous 1N calcium nitrate at pH=8 (by addition of calcium acetate) at reflux temperature. The sample was washed, dried at 130°C and calcined overnight at 1000°F (540°C).

0107384

## Example 2

A sample (11 g) of HZSM-5 ($SiO_2/Al_2O_3$=70, $\alpha$=200) was treated with 5.8 g of calcium nitrate dissolved in liquid ammonia using dry ice/alcohol as the coolant. The zeolite was mixed as $NH_3$ was allowed to evaporate and was heated to 130°C to drive off any residual ammonia. Half of the calcium nitrate loaded sample was calcined at 1000°F (540°C) and tested for hexane cracking activity ($\alpha$).

## Example 3

The balance of calcium nitrate loaded ZSM-5 from Example 2 was moistened and submitted to vacuum ($\sim$ 25 mm Hg) for 10 minutes. It was then washed twice with dilute ($\sim$ 0.5N) $Ca(NO_3)_2$. The sample was then calcined at 1000°F (540°C) and tested for activity ($\alpha$).

### Catalyst Evaluation

| Example | Treat | $\alpha$ | Constraint Index C.I. | n–Hexane Sorption, Wt. % |
|---------|-------|----------|-----------------------|--------------------------|
| 1 | Aqueous Exchange | 70 | -- | -- |
| 2 | Liquid $NH_3$ load | 7.0 | -- | 9.8 |
| 3 | Liquid $NH_3$ load + aqueous wash | 11.0 | 2.0 | 10.8 |

Above shows Ca inclusion greater in Examples 2 and 3. The high $\alpha$ (70) in Example 1 is due to the lower degree of exchange typically obtained in aqueous media.

CLAIMS:

1.  A method for preparing a metal-impregnated crystalline aluminosilicate which comprises contacting the crystalline aluminosilicate with solution of a metal compound in a liquid, non-aqueous inorganic solvent and recovering the resultant cation-exchanged or metal-loaded crystalline aluminosilicate.

2.  The method of claim 1 wherein the cation is selected from alkaline earth metals, rare earth metals and the transition metals.

3.  The method of claim 1 wherein the liquid inorganic solvent is liquid ammonia.

4.  The method of claim 3 wherein the metal is in the form of a metal salt in the liquid ammonia.

5.  The method of claim 4 wherein the metal salt comprises a metal nitrate.

6.  The method of claim 3 wherein the metal is present in the liquid ammonia as a base.

7.  The method of claim 6 wherein the base is the ammonium base of the metal.

8.  The method of claim 1 wherein the crystalline aluminosilicate has a silica-to-alumina mole ratio greater than 20.

9.  The method of claim 1 wherein the recovered cation-exchanged or loaded crystalline aluminosilicate is calcined.

10. The method of claim 9 wherein the calcined aluminosilicate is hydrated and subsequently contacted with a liquid, non-aqueous inorganic solvent solution of the cation and then further calcined.

1649H

# EUROPEAN SEARCH REPORT

Application number

EP 83 30 5823

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | Chemical Abstracts vol. 93, no. 20, 17 November 1980, Columbus, Ohio, USA J. FOURNIER et al. "Preparation of nickel X zeolite from synthetic NaX lin liquid ammonia. Reduction by molecular hydrogen", page 406, column 1, abstract no. 192657j & Zh. Prikl. Khim. (Leningrad), vol. 63, no. 7, 1980, pages 1485-1489 | 1,3 | C 01 B 33/28<br>B 01 J 37/30<br>B 01 J 37/02 |
| | --- | | |
| A | US-A-4 279 737 (R.R. CHIANELLI et al.)<br>* Claims 5, 9, 12, 13 * | | |
| | --- | | |
| D,A | US-A-3 528 768 (S. TUCKER) | | |
| | --- | | TECHNICAL FIELDS SEARCHED (Int. Cl. ³) |
| D,A | US-A-3 959 179 (R.J. MIKOVSKY et al.) | | |
| | ----- | | C 01 B 33/28<br>B 01 J 20/00<br>B 01 J 37/00 |

The present search report has been drawn up for all claims

| Place of search<br>BERLIN | Date of completion of the search<br>23-12-1983 | Examiner<br>KESTEN W |
|---|---|---|